(19) Europäisches Patentamt
European Patent Office
Office européen des brevets

(11) EP 2 757 501 A1

(12) # EUROPÄISCHE PATENTANMELDUNG

(43) Veröffentlichungstag:
**23.07.2014 Patentblatt 2014/30**

(51) Int Cl.:
***G06K 9/00*** *(2006.01)*

(21) Anmeldenummer: **13193782.3**

(22) Anmeldetag: **21.11.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **18.01.2013 DE 102013200817**

(71) Anmelder: **Hella KGaA Hueck & Co**
**59552 Lippstadt (DE)**

(72) Erfinder:
- **Stefanovic, Marko**
  **13086 Berlin (DE)**
- **Karsch, Jan**
  **10318 Berlin (DE)**

(74) Vertreter: **Grauel, Andreas**
**Grauel IP**
**Patentanwaltskanzlei**
**Presselstrasse 10**
**70191 Stuttgart (DE)**

(54) **Verfahren zur Erkennung einer Belegung einer überwachten Zone**

(57) Die Erfindung betrifft ein Verfahren zur Erkennung einer Belegung einer überwachten räumlichen Zone, mittels einer ein Stereobild erzeugenden Bildaufnahmevorrichtung zur Erzeugung eines ersten Bildsignals (imgL) und eines zweiten Bildsignals (imgR), wobei die beiden ersten und zweiten Bildsignale (imgL,imgR) oder daraus verarbeitete Bildsignale mittels eines Stereo-Vergleichsverfahrens zu einem dritten Bildsignal (img) verarbeitet werden, aus welchem eine Höhenkarte mit Höhendaten der überwachten Zone erzeugt wird und daraus ein Belegungsstatus der überwachten Zone bestimmt wird und der Belegungsstatus ausgegeben wird.

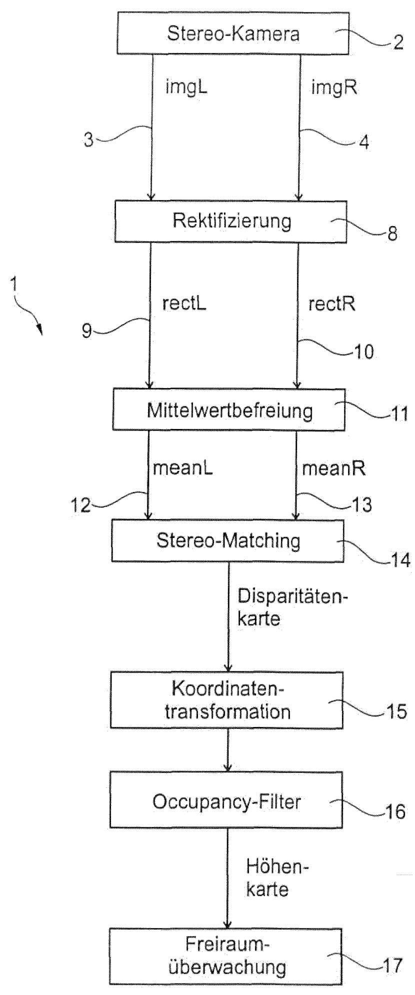


Fig. 1

EP 2 757 501 A1

## Beschreibung

Technisches Gebiet

Die Erfindung betrifft ein Verfahren zur Erkennung einer Belegung einer überwachten Zone.

Stand der Technik

Die Belegung einer Zone oder eines Raumbereichs ist in verschiedenen Situationen von Interesse. So kann beispielsweise die Erkennung einer Belegung eines Raumbereichs oder einer Zone eines Raumbereichs mit Sicherheitsrelevanz wichtig für die Funktion einer automatisierten Betätigung von Elementen sein. So ist bei Kraftfahrzeugen der Einstiegsbereich mit automatisiert betätigten Türen ein besonders relevanter Bereich zur Überwachung einer Zone und der Kenntnis der Belegung der Zone, da bei Anwesenheit einer Person oder eines Gegenstands in der Zone eine automatisierte Schließung der Tür sicherheitsrelevant ist und ggf. zu vermeiden wäre.

Daher ist durch die DE 10 2010 054 626 A1 ein Verfahren zur Überwachung eines Gefahrenbereichs, wie des Einstiegsbereichs eines Verkehrsmittels bekannt geworden, bei welchem eine Bilderfassungseinheit den Einstiegsbereich des Verkehrsmittels überwacht und bei einer Anwesenheit oder einer Bewegung einer Person in dem Einstiegsbereich ein Schließvorgang einer Fahrzeugtür automatisch unterbrochen wird. Dabei werden mittels einer Kamera Personen oder Gegenstände erfasst, die sich in dem Einstiegsbereich befinden. Nach einer bevorzugten Vorkalibrierung wird die Geometrie des Einstiegsbereichs, in dem sich keine Personen befinden, erfasst und dreidimensional rekonstruiert. Anschließend wird ein Flächenmodell erzeugt, welches als Referenzmodell gespeichert wird, so dass bei Anwendung des Verfahrens zwischen dem Verkehrsmittel und seinen Objekten und fremden Objekten unterschieden werden kann.

Dabei wird jedoch jede Veränderung im Vergleich zu einem Referenzbild als erkannte Person oder als erkannter Gegenstand identifiziert. Eine Belegung einer vordefinierten Zone durch eine Person oder einen dynamisch sich verändernden Gegenstand erfolgt dadurch jedoch nicht sicher, weil auch statische Gegenstände oder geringfügige Gegenstände, wie kleine Gegenstände, Unrat, Flaschen etc. auch als gleichwertig erkannt werden dennoch keine Belegung im tatsächlichen Sinne bedeuten.

Die Kenntnis der Belegung einer Zone ist aber auch für andere Anwendungen relevant, wo eine Steuerung in Abhängigkeit der Belegung einer Zone durchgeführt oder verhindert werden kann.

Darstellung der Erfindung, Aufgabe, Lösung, Vorteile

Daher ist es die Aufgabe der vorliegenden Erfindung ein Verfahren zur Erkennung einer Belegung einer überwachten Zone zu schaffen, das gegenüber dem Stand der Technik verbessert ist und eine sichere Erkennung einer Belegung einer Zone erlaubt, wobei statische Objekte oder geringfügige Objekte in der Zone keine Belegung repräsentieren sollen.

Die Aufgabe der vorliegenden Erfindung hinsichtlich des Verfahrens mit den Merkmalen gemäß Anspruch 1 gelöst.

Ein Ausführungsbeispiel der Erfindung betrifft ein Verfahren zur Erkennung einer Belegung einer überwachten räumlichen Zone, mittels einer ein Stereobild erzeugenden Bildaufnahmevorrichtung zur Erzeugung eines ersten Bildsignals und eines zweiten Bildsignals, wobei die beiden ersten und zweiten Bildsignale oder daraus verarbeitete Bildsignale mittels eines Stereo-Vergleichsverfahrens zu einem dritten Bildsignal verarbeitet werden, aus welchem eine Höhenkarte mit Höhendaten der überwachten Zone erzeugt wird und daraus ein Belegungsstatus der überwachten Zone bestimmt wird und der Belegungsstatus ausgegeben wird. Dadurch wird ein Belegungsstatus nur als belegt gesetzt, wenn ein Gegenstand oder eine Person in die Zone gelangt, der bzw. die eine bestimmte vorgebbare Höhe aufweist. Dabei ist es besonders vorteilhaft, wenn die vorgebbare Höhe des Objekts bzw. der Person ein Mindestmaß erreicht, das beispielsweise zumindest 50 cm beträgt. Alternative Größen für das Mindestmaß sind dabei auch zulässig und möglich. Dabei ist wesentlich, dass der zulässige Gegenstand einen relevanten Effekt auf das Höhenprofil in der Zone erzeugt, um einen signifikanten und detektierbaren Effekt in der erzeugten Höhenkarte zu erzeugen.

Besonders vorteilhaft ist es, wenn Höhendaten der Höhenkarte oder einer bereinigten Höhenkarte oder daraus abgeleitete Daten mit einem Höhenschwellenwert verglichen werden und daraus der Belegungsstatus ermittelt wird.

Auch ist es zweckmäßig, wenn auf die Höhendaten der Höhenkarte ein Verfahren zur Hintergrundunterdrückung angewendet wird, zur Erzeugung hintergrundbereinigter Höhendaten und damit einer hintergrundbereinigten Höhenkarte, wobei die bereinigten Höhendaten der bereinigten Höhenkarte mit einem Höhenschwellenwert verglichen werden und daraus ein Belegungsstatus der überwachten Zone bestimmt wird und ein Belegungssignal oder ein Belegungsstatus ausgegeben wird. Damit kann das Objekt bzw. die Person besser von dem Hintergrund unterschieden werden.

Vorteilhaft ist es, wenn bei Überschreiten des Höhenschwellenwerts durch die bereinigten Höhendaten der

bereinigten Höhenkarte ein Belegungsstatus der überwachten Zone als belegt gesetzt wird, da ein Überschreiten des Höhenschwellwerts nun nicht mehr durch den statischen Hintergrund erzeugt worden ist, sondern durch ein durch seine Höhe relevantes Objekt.

Erfindungsgemäß ist es zweckmäßig, wenn die Zone in Teilbereiche bzw. Pixel unterteilt wird, wobei eine vorgebbare Anzahl von Teilbereichen oder Pixeln vorliegen muss, in welchen der Höhenschwellwert durch die Höhendaten überschritten sein muss, damit ein Belegungsstatus als belegt gesetzt wird. Dabei kann die Unterteilung der Zone durchaus durch die Bildaufnahmevorrichtung vorgenommen werden. Dabei ist es zweckmäßig, wenn anderenfalls der Belegungsstatus als unbelegt gesetzt wird.

Auch ist es erfindungsgemäß zweckmäßig, wenn die beiden ersten und zweiten Bildsignale (imgL,imgR) mittels eines Korrekturverfahrens, wie eines Rektifizierungsverfahrens, zu einem ersten und einem zweiten rektifizierten Bildsignal (rectL,rectR) verarbeitet werden. Dabei werden optische Korrekturen durchgeführt, um das erzeugte Bild der Realität anzunähern.

Auch ist es zweckmäßig, wenn die ersten und zweiten Bildsignale oder die ersten und zweiten rektifizierten Bildsignale durch ein Verfahren einer Mittelwertbefreiung zu mittelwertbefreiten Bildsignalen (meanR,meanL) verarbeitet werden. Durch die Mittelwertbefreiung werden die Helligkeiten einzelner Regionen im linken und rechten Bild normiert, was sich auf die Identifizierung des Gegenstands oder der Person bzw. des Objekts noch einmal positiv auswirkt.

Weiterhin ist es zweckmäßig, wenn aus den dritten Bildsignalen (img) eine Disparitätenkarte mit Disparitätendaten erzeugt wird, aus welcher mit oder ohne weitere Bearbeitung eine Höhenkarte mit Höhendaten der überwachten Zone erzeugt wird. Die Disparitäten entstehen aufgrund der Verwendung der Stereokamera bzw. von Stereobildsignalen, die aufgrund der Aufnahmetechnik relativ zueinander verschoben sind bzw. aus einem anderen Bildwinkel aufgenommen sind.

Zur weiteren Verbesserung des Ergebnisses kann auf die Disparitätendaten der Disparitätenkarte eine Koordinatentransformation ausgeübt wird. Dadurch kann eine Transformation in einen Ortsraum erfolgen, der einfacher zu analysieren ist oder welcher der Realität näher kommt.

Auch ist es zweckmäßig, wenn auf die Disparitätendaten der Disparitätenkarte oder auf die koordinatentransformierten Disparitätendaten ein Filter angewendet wird, so dass daraus die Höhenkarte mit den Höhendaten erzeugt wird. Dadurch kann die Qualität des auszuwertenden Bildes bzw. Datensatzes noch einmal erhöht werden.

Entsprechend ist es zweckmäßig, wenn aus der Höhenkarte mit den Höhendaten ein Verfahren zur Freiraumüberwachung angewendet wird. Dadurch wird die Auswertung der Höhenkarte bzw. die Auswertung der Höhendaten verwendet, um die Belegung der überwachten Zone zu bestimmen.

Dabei ist es vorteilhaft, wenn das Verfahren zur Freiraumüberwachung einen Filter, wie insbesondere einen Medianfilter, zur Filterung von Bilddaten oder Höhendaten aufweist. Dabei wird der Medianfilter eingesetzt, um auch Ausreißer in den Bild- oder Höhendaten filtern und ausgleichen zu können.

Weiterhin ist es vorteilhaft wenn die Höhenkarte mit einer Occupancykarte kombiniert wird, insbesondere derart, dass jeder Occupancywert mit dem Wert der Höhenkarte addiert wird, welcher hinsichtlich der Lage in der Welt zu dem Occupancywert korrespondiert.

Dabei ist es weiterhin vorteilhaft, wenn das Verfahren zur Freiraumüberwachung ein Verfahren zur Hintergrundunterdrückung umfasst, welches Bilddaten oder Höhendaten mittels Hintergrundbild- bzw. höhendaten korrigiert oder befreit. So kann die Topografie des Hintergrunds mit statischen Gegenständen in der gesamten Höhenkarte ausgeschlossen werden.

Auch ist es zweckmäßig, wenn die Höhendaten segmentiert werden, so dass Daten von zusammenhängenden Teilbereichen oder Pixeln, welche sich bezüglich eines Datenwertes, beispielsweise dem Höhen- oder Grauwert von der Umgebung unterscheiden, als zu einem Segment zugehörig bewertet werden.

Dabei kann ein "Connected Component Labeling"-Verfahren angewendet werden, welches anhand der Grauwerte der Pixel und auch der Nachbarschaft ein zusammenhängendes Segment erkennt, so dass auch die Größe oder Ausdehnung des Segments ermittelbar ist.

Weiterhin ist es vorteilhaft, wenn bei mindestens einem vollständig in einer Zone befindliches Segment, die Zone als belegt definiert wird.

Alternativ kann bei mindestens einem vollständigen oder mit nur einem messbaren Anteil in einer Zone befindlichen Segment, die Zone als belegt definiert werden. Weiterhin ist es besonders vorteilhaft, wenn die Daten der Segmente ausgewertet werden, wobei bei einer vordefinierten Größe oder Ausdehnung eines Segments die Zone als belegt definiert wird. Dabei ist es besonders vorteilhaft, wenn die vorgebbare Größe oder Ausdehnung des Segments ein Mindestmaß erreicht, das beispielsweise zumindest 30cm x 30 cm (Breite x Höhe) beträgt. Alternative Größen für das Mindestmaß sind dabei auch zulässig und möglich. So kann bei einer gewissen vorgebbaren Größe oder Ausdehnung ein Schwellwert für ein Segment festgelegt werden, so dass ein Segment mit geringerer Größe oder Ausdehnung noch nicht zur Festlegung einer Belegung führt. Darüber hinaus können dadurch geringfügige Effekte und Datenfehler ausgeschlossen werden. Dabei ist es vorteilhaft, wenn der Größe oder Ausdehnung der Segmente eine Größe oder Ausdehnung eines Objekts im realen Raum oder umgekehrt zugeordnet wird.

Dabei ist es zweckmäßig, wenn ein Segment als in der Zone befindlich angesehen wird, wenn das Segment vollständig oder nur teilweise in der Zone liegt. Bei einer teilweisen Belegung des Segments in der Zone kann das Segment für die Belegung als zu berücksichtigend angesehen werden, wenn der Anteil des Segments in der Zone einen messbaren Anteil in der Zone aufweist. Dies ist insbesondere dann vorteilhaft, wenn die Größe oder Ausdehnung des Objektes das vorgegebene Mindestmaß erreicht, selbst wenn weitere Anteile des Segments nicht in der Zone liegen. Auch kann es zweckmäßig sein, wenn der Anteil in der Zone eine zweite vordefinierte Größe oder Ausdehnung aufweist, selbst wenn weitere Anteile des Segments nicht in der Zone liegen.

Besonders vorteilhaft ist es, wenn zur Hintergrundunterdrückung ein Referenzbild aufgenommen wird, welches zur Hintergrundunterdrückung herangezogen wird. Dabei wird bevorzugt in einem Lernvorgang bei unbelegter Zone das Referenzbild aufgenommen, um statische Strukturen und Objekte erkennen und festlegen zu können, die bei der späteren Auswertung von Bilddaten nicht als Gegenstand oder Person gewertet werden sollen.

Wird das Referenzbild in einem Lernmodus aufgenommen, so kann eine Art Eichung in einer Betriebsphase vorgenommen werden, die durch definierte Bedingungen nicht gestört ist. So kann aus dem Referenzbild eine Höhenkarte der Referenz erzeugt werden, um statische Höhen später bei der Auswertung von Bilddaten berücksichtigen zu können.

Auch ist es zweckmäßig, wenn im Lernmodus über die erzeugte Höhenkarte des Referenzbilds ein Mittelwert, wie insbesondere ein exponentieller Mittelwert, gebildet wird. Dadurch können Fehler ausgeglichen werden, damit sie im Prozess der Erkennung einer Belegung keine besondere Auswirkung haben. Dabei kann der exponentielle Mittelwert gebildet werden durch:

$$R1(x,y) = R0(x,y) + a * (I(x,y) - R0(x,y))$$

mit:

$R1(x,y) =$ Pixel in Referenzkarte zum Zeitpunkt t+1

$R0(x,y) =$ Pixel in Referenzkarte zum Zeitpunkt t

$I(x,y) =$ Pixel in aktueller Höhenkarte zum Zeitpunkt t

$A =$ Lernrate (als Wert der Menge [0...1])

Die Dauer der Lernphase beträgt dabei vorteilhaft eine vorgebbaren Zeitdauer von etwa 5 Sekunden.

Alternativ ist es zweckmäßig, wenn im Lernmodus über die aktuelle Höhenkarte das zeitliche Maximum gebildet wird. Dadurch können Fehler ausgeglichen werden, damit sie im Prozess der Erkennung einer Belegung keine besondere Auswirkung haben. Dabei kann das zeitliche Maximum wie folgt gebildet werden:

$$R1(x,y) = I(x,y) \qquad \text{wenn } I(x,y) > R0(x,y)$$

oder

$$R1(x,y) = R0(x,y) \qquad \text{sonst}$$

mit:

$$R1(x,y) = \text{Pixel in Referenzkarte zum Zeitpunkt } t+1$$

$$R0(x,y) = \text{Pixel in Referenzkarte zum Zeitpunkt } t$$

$$I(x,y) = \text{Pixel in aktueller Höhenkarte zum Zeitpunkt } t$$

Die Dauer der Lernphase beträgt dabei vorteilhaft eine vorgebbaren Zeitdauer von etwa 5 Sekunden.
Besonders vorteilhaft ist es, wenn die erzeugte Höhenkarte wie folgt gefiltert wird:

$$I(x,y) = I(x,y) \qquad \text{wenn } R(x,y) = 0 \text{ oder } I(x,y) >= R(x,y) + t$$

oder

$$I(x,y) = 0 \qquad \text{ansonsten.}$$

mit

$$I(x,y) = \text{Pixeln } x,y \text{ der aktuellen Höhenkarte,}$$

$$R(x,y) = \text{Pixel } x,y \text{ des Referenzbilds, und}$$

$$t = \text{Schwellwert}$$

Dies bewirkt, dass die Pixel auf Null gesetzt werden, die eine geringere Höhe aufweisen, als die korrespondierenden Pixel in der Referenzkarte plus einen Schwellwert.
Um Rauschen in der Höhenkarte zu kompensieren, sind die Werte, wie insbesondere des Schwellenwerts parametrisierbar.
Auch ist es zweckmäßig, wenn die überwachte Zone zumindest eine räumliche Hysterese aufweist. Damit wird erreicht, dass Objekte an der Grenze der überwachten Zone nicht zwischen einem belegten und einem unbelegten Zustand hin-und herschalten
Dabei ist es vorteilhaft, wenn die überwachte Zone bei als belegt geltendem Zustand vergrößert wird. So wird vermieden, dass Objekte am Rand keinen Einfluss für ein ständiges Hin- und Herschalten haben.
Auch ist es zweckmäßig, wenn die überwachte Zone zumindest eine zeitliche Hysterese aufweist.
Dabei ist es zweckmäßig, wenn die überwachte Zone eine zeitliche Hysterese (HystAct) bei der Aktivierung und eine zeitliche Hysterese (HystDeact) bei der Deaktivierung aufweist.
Dabei wird zwischen "aktuell belegt" bzw. "aktuell nicht belegt" und "belegt" bzw. "nicht belegt" unterschieden. "aktuell" bedeutet im aktuellen Frame. Nach einer Nachverarbeitung wird der eigentliche Zustand "belegt" oder "nicht belegt" nach außen gesendet. Dieser finale Zustand resultiert aus einer zeitlichen Verrechnung des aktuellen Status.
Hysterese für Aktivierung ("HystAct") und Deaktivierung ("HystDeact")
Eine Zone muss für mindestens für den HystAct nachfolgenden Frame "aktuell belegt" sein, damit ihr Zustand von "nicht belegt" auf "belegt" wechseln kann.
Weiterhin muss eine Zone für mindestens für den HystDeact nachfolgenden Frame "aktuell nicht belegt" sein, damit ihr Zustand von "belegt" nach "nicht belegt" wechseln kann.

Vorteilhaft ist es, wenn ein Objekt über eine erste zeitliche Mindestzeitdauer sich in der überwachten Zone befinden muss, bevor der Belegungszustand der Zone als belegt gesetzt wird.
Auch ist es vorteilhaft, wenn ein Objekt über eine zweite zeitliche Mindestzeitdauer sich nicht in der überwachten Zone befinden muss, bevor der Belegungszustand der Zone als nicht belegt gesetzt wird.
Vorteilhafte Weiterbildungen der vorliegenden Erfindung sind in den Unteransprüchen und der nachfolgenden Figurenbeschreibung beschrieben.

Kurze Beschreibung der Zeichnungen

Im Folgenden wird die Erfindung anhand eines Ausführungsbeispiels unter Bezugnahme auf eine Zeichnung detailliert erläutert. In der Zeichnung zeigt:

| | |
|---|---|
| Fig.1 | ein Diagramm zur Erläuterung der Erfindung, |
| Fig. 2 | ein Diagramm zur Erläuterung der Freiraumüberwachung nach Fig. 1, |
| Fig. 3a | ein Bild (imgL) der Stereokamera, |
| Fig. 3b | ein Bild (imgR) der Stereokamera, |
| Fig. 4a | ein rektifiziertes Bild (rectL), |
| Fig. 4b | ein rektifiziertes Bild (rectR), |
| Fig. 5a | ein mittelwertbefreites Bild (meanL), |
| Fig. 5b | ein mittelwertbefreites Bild (meanR), |
| Fig. 6 | eine Disparitätenkarte aus den Figuren 5a und 5b, |
| Fig. 7 | eine Höhenkarte, |
| Fig. 8 | drei Teilfiguren zur Darstellung des Verfahrens, |
| Fig. 9 | fünf Teilfiguren zur Darstellung des Verfahrens, |
| Fig. 10 | vier Teilfiguren zur Darstellung des Verfahrens, |
| Fig. 11 | zwei Teilfiguren zur Darstellung des Verfahrens, |
| Fig. 12 | ein Diagramm zur Erläuterung der zeitlichen Hysterese, |
| Fig. 13a | ein Diagramm zur Erläuterung der räumlichen Hysterese, |
| Fig. 13b | ein Diagramm zur Erläuterung der räumlichen Hysterese, |
| Fig. 13c | ein Diagramm zur Erläuterung der räumlichen Hysterese, und |
| Fig. 13d | ein Diagramm zur Erläuterung der räumlichen Hysterese. |

Bevorzugte Ausführung der Erfindung

Die Fig. 1 zeigt ein Diagramm 1, in welchem in Block 2 eine Stereo-Kamera als Bildaufnahmevorrichtung beispielhaft angegeben ist. Die Stereo-Kamera erzeugt zwei Bildsignale 3, 4, die mit imgL und imgR ein linkes und ein rechtes Bild darstellen. Innerhalb des Bildes wird jeweils eine auswählbare Zone als überwachte Zone definiert. Diese Zone kann durch einen imaginären Rahmen dargestellt werden.
Die Fig. 3a und 3b zeigen jeweils ein solches Bild imgL und imgR, beispielsweise als Einstiegsbereich eines Kraftfahrzeuges, wie einer Straßenbahn, eines Busses oder eines Zuges mit einer automatisiert betätigbaren Tür. Die

überwachte Zone 5 stellt einen Flächenbereich bzw. Volumenbereich dar, der im Ausführungsbeispiel in einem Einstiegsbereich des Fahrzeuges liegt. In den Fig. 3a und 3b ist zu erkennen, dass die Tür 6 geöffnet ist und eine Person 7 in der Zone 5 steht.

In Block 8 der Fig. 1 werden die Bilddaten 3, 4 mittels eines Rektifizierungsverfahrens korrigiert, so dass Bildverzerrungen ausgeglichen werden. Daraus resultieren rektifizierte Bildsignale 9, 10, die auch mit rectL und rectR bezeichnet sind.

Die diesbezüglichen Darstellungen der rektifizierten Bildsignale sind in den Fig. 4a und 4b ausgehend von den Fig. 3a und 3b dargestellt.

Die rektifizierten Bildsignale rectL und rectR werden in Block 11 der Fig. 1 mittels einer Mittelwertbefreiung verarbeitet, so dass eine nachfolgend verbesserte Bildverarbeitung ermöglicht wird. Aus der Mittelwertbefreiung gemäß Block 11 resultieren Bilddaten 12, 13, die als meanL und meanR bezeichnet sind.

Die mittelwertbefreiten Bilddaten meanL und meanR sind in den Fig. 5a und 5b dargestellt, ausgehend von den rektifizierten Bilddaten rectL und rectR gemäß der Fig. 4a und 4b.

Man erkannt, dass die mittelwertbefreiten Bilddaten meanL und meanR der Fig. 5a und 5b gleichmäßiger in ihrem Kontrast sind, so dass die diesbezüglichen Bilder eine weitere Bearbeitung erleichtern.

In Block 14 wird mittels der mittelwertbefreiten Bilddaten 12, 13 meanL und meanR ein Stereo-Matching-Verfahren bzw. ein Stereo-Vergleichsverfahren durchgeführt zur Erzeugung dritter Bildsignale img, die eine Disparitätenkarte darstellen. Diese Disparitätenkarte ist in Fig. 6 auf der Basis der Daten der Fig. 5a und 5b dargestellt.

In Block 15 wird eine Koordinatentransformation der Disparitätenkarte erzeugt und in Block 16 wird auf die Ausgangsdaten des Blocks 15 ein Filter 16, wie beispielsweise ein Occupancy-Filter angewendet, so dass eine Höhenkarte resultiert. Die diesbezügliche Höhenkarte ist in Fig. 7 ausgehend von der Disparitätenkarte der Fig. 6 dargestellt. Die Höhenkarte ist anschließend Gegenstand einer Freiraumüberwachung 17 zur Erkennung einer Belegung einer überwachten räumlichen Zone.

In Fig. 1 Block 16 kann alternativ und oder zusätzlich zur Anwendung des Occupancy-Filters eine Occupancy-Addition eingesetzt werden. Dazu wird die aus Block 15 resultierende Höhenkarte für die Occupancy-Addition nicht anhand der Daten der Occupancy-Karte gefiltert, sondern mit der Occupancy-Karte kombiniert. Dafür können Teilbereiche oder Pixel der jeweiligen Karten addiert werden. Die Werte der Teilbereiche oder Pixel der Occupancy-Karte können beispielsweise wie folgt ermittelt werden. Es kann ein Entfernungswert von der Kamera z eines Teilbereichs oder Pixels x,y, beispielsweise der Entfemungskarte, mit der Pixelgröße p des verwendeten Sensors multipliziert werden und durch die Brennweite f dividiert werden. Bei den Werten p und f handelt es sich dabei um vorgegebene Werte, die aus den Parametern der Bildaufnahmevorrichtung bekannt sind.

Der Wert eines Pixels o i,j der Occupancy-Karte wird dadurch berechnet, dass die Quadrate der bekannten Entfernungswerte z x,y aufsummiert werden.

$$o_{i,j} = \frac{p^2}{f^2} \sum_{x,y=1}^{n} {z_{x,y}}^2$$

Hierzu wird der Entfernungswert von jedem sich auf der Entfernungskarte befindenden Pixels ausgelesen, quadriert und mit den Parametern p^2/f^2 multipliziert. Die Summe, multipliziert mit dem Vorfaktor ist der Occupancy-Wert eines Teilbereichs der Überwachungszone, die auf ein x,y-tes Pixel der Bildaufnahmevorrichtung abgebildet wird. Jeder Occupancy-Wert ist also berechenbar als die Summe aller quadratischen Entfernungswerte des auf die Bildvaufnahmevorrichtung abgebildeten Profils, für den zugeordneten Teilbereich im Weltkoordinatensystem.

Die Entfernungskarte berechnet sich beispielsweise aus der Disparitätenkarte. Dies kann dadurch erfolgen, dass anhand der durch die Kamera bekannten Kameraparameter und der Disparitätswerte die Entfernungskoordinate der 3D-Position des jeweiligen Teilbereichs oder Pixels berechnet wird.

Die Verwendung einer Occupancyaddition ist für eine effiziente Unterdrückung des Hintergrundes besonders vorteilhaft.

Die Fig. 2 zeigt ein Diagramm 20, welches die Freiraumüberwachung gemäß Fig. 1 erläutert. Die Eingangsdaten 21 der Freiraumüberwachung stellen die Höhenkarte der Fig. 1 dar. Die Daten der Höhenkarte werden in Block 22 mittels eines Medianfilters gefiltert. Alternativ oder zusätzlich können auch andere Filter angewendet werden, um die Daten der Höhenkarte anzugleichen und beispielsweise Ausreißer zu kompensieren. Insbesondere ist eine Schwellwertfilterung vorteilhaft. Beim Einsatz der Occupanyaddition ist es sinnvoll den Filter, insbesondere den Medianfilter, bereits vor der Occupancyaddition auf die Höhenkarte anzuwenden. Weiterhin ist es sinnvoll eine Skalierung des Wertebereichs der Occupancykarte vor der Occupancyaddition vorzunehmen.

Die Fig. 8 zeigt im oberen linken Bild einen Ausschnitt einer Höhenkarte, die mittels eines Medianfilters gemäß Block 22 bearbeitet ist. Das mediangefilterte Bild 23 wird mittels einer Hintergrundunterdrückung gemäß Block 24 bearbeitet und es resultiert das Bild 25 der Fig. 8. Man erkennt, dass seitliche Elemente des Bildes 23 in Bild 25 fehlen, was auf die Hintergrundunterdrückung zurückzuführen ist. In Block 26 erfolgt eine Segmentierung der Bilddaten des Bildes 25 nach der Hintergrundunterdrückung. Dies bedeutet, dass jedem Segment ein gleicher Grauwert zugeschrieben wird. Dies bedeutet, dass sämtliche Pixel eines Segments die gleichen Grauwerte annehmen. Dies ist in Bild 27 der Fig. 8 dargestellt.

Aus dem Bild 27 wird dann gemäß Block 28 eine Überwachung einer Belegung ermittelt und gemäß Pfeil 29 wird ein Belegungsstatus ausgegeben.

Der Medianfilter ist beispielsweise ein 3x3-Filter und dient dem Unterdrücken von Rauschen des Bildes. Dabei werden sehr kleine Segmente entfernt, beispielsweise Segmente, die kleiner als 5 Pixel sind.

Die Hintergrundunterdrückung gemäß Block 24 hat die Aufgabe Störstellen zu unterdrücken, so dass statische Hintergründe nicht mehr zur Ermittlung der Belegung herangezogen werden. Diese statischen Elemente können beispielsweise geöffnete Türen oder ein Handlauf in einem Bus oder einer Bahn sein oder auch Absperrungen in Gebäudebereichen etc. Bei der Hintergrundunterdrückung wird ein Referenzbild während der Inbetriebnahme erzeugt und angelegt. Hierzu kann ein Installateur der erfindungsgemäßen Vorrichtung zur Durchführung eines erfindungsgemäßen Verfahrens eine Lernphase starten, welche ein Referenzbild erzeugt. Dabei wird vorteilhaft beim Starten der Lernphase das Referenzbild zuerst auf Null gesetzt und anschließend neu erzeugt.

Die Fig. 9 zeigt ein Beispiel für ein erfindungsgemäßes Verfahren. In Bild 30 ist ein Eingangsbereich 31 eines Busses oder einer Bahn mit einer Person 32 und einer zu überwachenden Zone 33 dargestellt. In Bild 34 ist der gleiche Eingangsbereich 31, jedoch ohne die Person als Referenzbild dargestellt. In beiden Bildern sind die geöffneten Türen 35, 36 mit den Handläufen als Störstellen vorhanden. Bild 37 zeigt die mediangefilterte Höhenkarte ausgehend von dem Bild 30, wobei das Bild 38 die mediangefilterte Höhenkarte des Referenzbildes 34 zeigt. In Bild 37 ist die Person in der Höhenkarte von den Störstellen der Türen nicht zu trennen, wobei in Bild 38 lediglich die Störstellen als Höhenkarte dargestellt ist. Werden die Daten nun miteinander verarbeitet, so dass die Höhenkarte des Referenzbildes 38 von der Höhenkarte des Bildes 37 subtrahiert wird, so verbleibt in Bild 39 lediglich die Höhenkarte der in der überwachten Zone vorhandenen Person. Alternativ können die Störstellen anhand eines Referenzmodells entfernt werden. Das Referenzmodell kann dabei ebenfalls bei der Installation erzeugt werden oder voreingestellt sein. Das Referenzmodell beschreibt ein Störobjekt anhand von Höhen und Ausdehnungsdaten unabhängig vom Bewegungszustand. Dies hat den Vorteil, dass die Störstelle in jedem Status der Bewegung entfernt werden kann. Abhängig von der Position des gefundenen Modells im Bild kann zusätzlich der Bewegungszustand einer oder mehrerer Störstellen ermittelt werden. Dadurch ist es beispielsweise möglich den Öffnungsstatus einer Tür festzustellen.

Die Fig. 10 zeigt in Bild 40 eine Person in der Zone 42, wobei im Referenzbild 41 in der Zone 42 niemand vorhanden ist. Die Höhenkarte 43 zeigt ein Segment 44 in der überwachten Zone, wobei die Höhenkarte 45 in der überwachten Zone keine Segmente offenbart.

Das erfindungsgemäße Verfahren bewertet das Segment in der überwachten Zone beispielsweise über seinen Flächeninhalt, dies bedeutet, vorteilhaft über die Anzahl der Pixel in der Höhenkarte. Ist die Anzahl der Pixel in der Höhenkarte innerhalb der überwachten Zone größer als ein vorgebbarer Schwellenwert, so gilt die Zone als belegt. Dabei kann der Schwellenwert beispielsweise auch parametrisierbar sein, dies bedeutet, von Betriebszuständen abhängig gestaltet sein.

Die Fig. 11 zeigt in Bild 50, dass eine Person 51 vor dem Fahrzeug, also nicht in der überwachten Zone im Eingangsbereich steht. Die daraus resultierende Höhenkarte 52 zeigt, dass in der überwachten Zone 53 nahezu keine Segmente in der Höhenkarte zu erkennen sind. Die überwachte Zone gilt daher als leer und nicht als belegt.

Bei der Erfindung ist die Höhenkarte eine Höhenkarte in dem Weltkoordinatensystem. Ein Element bildet sich immer auf die gleiche Fläche in der Höhenkarte ab, unabhängig von der Höhe der Kamera, die das Objekt aufnimmt. Alternativ kann auch ein anderes Koordinatensystem gewählt werden.

Dabei können zwei Parameter eines Objekts bestimmt werden: die Fläche auf der Höhenkarte und die Höhe in der Höhenkarte.

Die Fläche entspricht der Größe oder der Ausdehnung eines Segments beispielsweise in Pixeln und ebenso der Ausdehnung, wie der Breite oder Dicke, eines Objekts.

Die Höhe entspricht der Größe eines Objekts in Höhenrichtung.

Ab einer bestimmten Fläche wird ein Bereich als belegt gesetzt. Ab einer bestimmten Höhe wird ein Objekt überhaupt erst betrachtet und ist dann erst auf der Höhenkarte sichtbar. Dies bedeutet, dass bei einem vorteilhaften Ausführungsbeispiel sowohl die Höhe als auch die Fläche über einem jeweiligen Schwellenwert liegen soll, damit eine Zone als belegt gesetzt wird.

Wie oben beschrieben, wird eine Zone auf ihre Belegung hin überwacht. Dazu hat es sich als vorteilhaft herausgestellt, dass die Zone einer Hysterese unterliegt, damit ein ständiges Hin- und Herschalten zwischen den Zuständen "belegt" und "nicht belegt" vermieden wird. Diesbezüglich kann eine zeitliche und/oder eine räumliche Hysterese angewendet werden.

Dabei ist es zweckmäßig, wenn die überwachte Zone eine zeitliche Hysterese (HystAct) bei der Aktivierung

und eine zeitliche Hysterese (HystDeact) bei der Deaktivierung aufweist. Die beiden Hysteresen können dabei gleich oder unterschiedlich sein. Dabei wird zwischen den Zuständen "aktuell belegt" bzw. "aktuell nicht belegt" und "belegt" bzw. "nicht belegt" unterschieden. "aktuell" bedeutet dabei ein Zustand im aktuellen Frame. Nach einer Nachverarbeitung wird der eigentliche Zustand "belegt" oder "nicht belegt" entsprechend der Hysteresevorgaben nach außen gesendet. Dieser finale Zustand resultiert aus einer zeitlichen Verrechnung des aktuellen Status mit den Hysteresevorgaben.

Eine Zone muss für mindestens eine Anzahl HystAct nachfolgender Frames "aktuell belegt" sein, damit ihr Zustand von "nicht belegt" auf "belegt" gewechselt wird. Diese Anzahl kann sich beispielsweise dadurch ergeben, dass ein Wert bei jedem Frame, in welchem der Zustand "aktuell belegt" vorliegt, um 1 erhöht und bei jedem Frame, in welchen der Zustand "aktuell nicht belegt" vorliegt um 1 verringert wird.

Weiterhin muss eine Zone für mindestens eine Anzahl HystDeact nachfolgender Frames "aktuell nicht belegt" sein, damit ihr Zustand von "belegt" nach "nicht belegt" gewechselt wird. Diese Anzahl kann sich beispielsweise dadurch ergeben, dass ein Wert bei jedem Frame, in welchem der Zustand "aktuell nicht belegt" vorliegt, um 1 erhöht und bei jedem Frame, in welchen der Zustand "aktuell belegt" vorliegt um 1 verringert wird.

Die zeitliche Hysterese besagt, dass ein Objekt sich für eine bestimmte erste Mindestzeitdauer innerhalb einer überwachten Zone befinden muss, damit diese Zone als belegt gesetzt wird. Die erste Mindestzeitdauer entspricht der Aktivierungszeitschwelle. Ebenso besagt dieses Verhalten mit Hysterese, dass sich das Objekt für eine bestimmte zweite Mindestzeitdauer außerhalb einer Zone befinden muss, um als nicht belegt gesetzt zu werden. Diese Zeitdauer entspricht der Deaktivierungszeitschwelle. Die genannten Schwellenwerte können dabei gleich oder auch unterschiedlich sein.

Ist ein Objekt innerhalb einer Zone, so wird diese als aktuell belegt definiert. Ist das Objekt außerhalb wird der Zustand aktuell nicht belegt definiert. Dieser Zustand ist ein interner Zustand, der ausgewertet wird, um einen zu kommunizierenden Belegungszustand zu bestimmen.

Bei einem nachfolgenden Beispiel sei der beobachtete Verlauf wie folgt, wobei die Bilder in einer zeitlichen Reihenfolge nacheinander aufgenommen sind:

Bild 0: Zone aktuell belegt,
Bild 1: Zone aktuell belegt,
Bild 2 Zone aktuell nicht belegt,
Bild 3 Zone aktuell nicht belegt,
Bild 4: Zone aktuell belegt.

Bei einer Aktivierungszeitschwelle von 1 und einer Deaktivierungszeitschwelle von 1 ergibt sich folgender Belegungszustand der Zone:

Bild 0: Ausgabe des Zustands "nicht belegt",
Bild 1: Ausgabe des Zustands "belegt",
Bild 2: Ausgabe des Zustands "belegt",
Bild 3: Ausgabe des Zustands "nicht belegt",
Bild 4: Ausgabe des Zustands "nicht belegt".

Bei einer Aktivierungszeitschwelle von 1 und einer Deaktivierungszeitschwelle von 2 ergibt sich folgendes:

Bild 0: Ausgabe des Zustands "nicht belegt",
Bild 1: Ausgabe des Zustands "belegt",
Bild 2: Ausgabe des Zustands "belegt",
Bild 3: Ausgabe des Zustands "belegt",
Bild 4: Ausgabe des Zustands "belegt".

Entsprechend ist verständlich, dass der Belegungszustand in Abhängigkeit der Hystereseschwellenwerte seinen Zustand schneller bzw. häufiger bzw. weniger schnell bzw. häufig ändert.

Die Figur 12 zeigt ein Diagramm, welches die zeitliche Hysterese erläutert. Auf der y-Achse ist die Anzahl der Zeitschritte aufgetragen, die es zur Überwindung des Schwellenwerts anzuzeigen gibt und auf der x-Achse sind die Zeitschritte aufgetragen, wobei je Zeitschritt der interne Belegungszustand, also der tatsächliche Belegungszustand, gezeigt ist und auch der als Belegungssignal ausgegebene Belegungszustand.

Als Belegungssignal ist der endgültige Belegungszustand gemeint, welcher nach Verrechnung der temporalen Hysterese resultiert. Dieses Signal wird von der erfindungsgemäßen Verfahrensweise ausgegeben. Das Signal besitzt dabei den Zustand "belegt" oder "nicht belegt"

Als aktueller Belegungszustand ist ein interner, framebasierter Belegungszustand gemeint. Dieser Zustand wird mit der temporalen Hysterese zu einem Belegungssignal verrechnet. Die Zone kann in einem Frame den Zustand

"aktuell belegt" oder "aktuell nicht belegt" besitzen.

Zum Zeitschritt 0 ist der Belegungszustand nicht belegt, also auch 0. Im ersten Schritt wird die Zone belegt, der interne Belegungszustand ist aktuell belegt und daher 1. Die Hysteresekurve HystActCurr ist auf 1. Der ausgegebene Belegungszustand ist nicht belegt, also 0, da er noch unter dem Schwellenwert von 5 liegt.

Im zweiten Schritt ist die Zone noch belegt, der interne Belegungszustand ist weiterhin aktuell belegt und daher 1. Die Hysteresekurve HystActCurr ist auf 2 als Summe zweier "belegt"-Werte. Der ausgegebene Belegungszustand ist nicht belegt, also 0, da er noch unter dem Schwellenwert von 5 liegt.

Im dritten Schritt ist die Zone auch noch belegt, der interne Belegungszustand ist weiterhin aktuell belegt und daher 1. Die Hysteresekurve HystActCurr ist auf 3 als Summe dreier "belegt"-Werte. Der ausgegebene Belegungszustand ist nicht belegt, also 0, da er noch unter dem Schwellenwert von 5 liegt.

Im vierten Schritt ist die Zone nicht belegt, der interne Belegungszustand ist aktuell nicht belegt und daher 0. Die Hysteresekurve HystActCurr ist auf 2 als Summe dreier "belegt"-Werte und eines "nicht belegt"-Wertes. Der ausgegebene Belegungszustand ist nicht belegt, also 0, da er noch unter dem Schwellenwert von 5 liegt.

Im fünften Schritt ist die Zone wieder belegt, der interne Belegungszustand ist wieder aktuell belegt und daher 1. Die Hysteresekurve HystActCurr ist auf 3 als Nettosumme dreier "belegt"-Werte (viermal belegt minus einmal nicht belegt). Der ausgegebene Belegungszustand ist nicht belegt, also 0, da er noch unter dem Schwellenwert von 5 liegt.

Im sechsten Schritt ist die Zone auch wieder belegt, der interne Belegungszustand ist belegt und daher 1. Die Hysteresekurve HystActCurr ist auf 4 als Nettosumme von vier "belegt"-Werten (fünfmal belegt minus einmal nicht belegt). Der ausgegebene Belegungszustand ist nicht belegt, also 0, da er noch unter dem Schwellenwert von 5 liegt.

Im siebten Schritt ist die Zone auch wieder belegt, der interne Belegungszustand ist aktuell belegt und daher 1. Die Hysteresekurve HystActCurr ist auf 5 als Nettosumme von fünf "belegt"-Werten (sechsmal belegt minus einmal nicht belegt). Der ausgegebene Belegungszustand ist belegt, also 1, da er auf dem Schwellenwert von 5 liegt.

Bei den nachfolgenden Schritten liegt der Zustand auf aktuell belegt und damit auch als Belegungssignal auf belegt.

Die räumliche Hysterese als Verfahrensweise zur Vermeidung von Hin- und Herschalten von Belegungszuständen wird nachfolgend erläutert.

Bei der räumlichen Hysterese wird die überwachte Zone um einen vorbestimmten Wert, beispielsweise 1 Höhenkartenpixel in alle Richtungen, vergrößert, sobald die Zone als belegt gesetzt ist.

Befindet sich ein Objekt in der überwachten Zone, so befindet sich im Minimalfall das Objekt zumindest mit einem Pixel in der Zone. Wird die Zone vergrößert, so befindet sich das Objekt durch die Vergrößerung der Zone in der Regel automatisch mit zumindest zwei Pixeln in der Zone. Diese gilt dann auch als belegt.

Wenn sich das Objekt bewegt, wie beispielsweise um ein Pixel in eine Richtung weg von der Zone bzw. aus der Zone, so bewegt es sich nicht gleich vollständig aus der Zone heraus, sondern das Objekt bleibt durch die Vergrößerung der Zone auch nach dieser Bewegung noch mit zumindest einem Pixel in der überwachten Zone. Die Zone bleibt somit als belegt bewertet.

Erst wenn sich das Objekt auch noch um einen weiteren Pixel zurückbewegt, tritt das Objekt vollständig aus der Zone und die Zone wird als nicht belegt markiert. Wird die Zone nach einer Vergrößerung der Zone aufgrund des gesetzten Belegungsstatus wieder als nicht belegt gesetzt, so reduziert sich die Ausdehnung der Zone wieder auf die ursprüngliche Ausdehnung der Zone. Dies bewirkt, dass das Objekt dann zumindest wieder um ein Pixel von der Zone entfernt ist, so dass bei einem nachfolgenden Annähern um ein Pixel die Zone dennoch unbelegt bleibt.

Der Betrag der Vergrößerung bzw. Verkleinerung der Zone ist wählbar und muss auch in Richtung Vergrößerung und in Richtung Verkleinerung nicht gleich sein.

Die räumliche Hysterese ist dabei besonders auf stehende Personen, beispielsweise in einem Bus, zugeschnitten. Diese Personen schwanken nur um einen geringen Wert, wie beispielsweise um ein Pixel, wobei auch im Falle, dass die Person sich an einem Rand einer Zone befindet, sie einen dauerhaften Zustand auslösen soll.

Vorteilhaft ist es, wenn das Verfahren zur zeitlichen Hysterese mit dem Verfahren der räumlichen Hysterese kombiniert wird.

Die Figuren 13a bis 13d erläutern diesen Sachverhalt exemplarisch. In Figur 13a ist das Segment 60 derart angeordnet, dass es teilweise in der Zone 61 liegt. Hat die Zone 61 den Zustand belegt, wird sie im nächsten Schritt mit der Umrahmung 62 vergrößert, dass die Umrahmung nun gemäß Linie 63 ist. Der Anteil des Segments 60, welcher in der Zone gemäß Umrahmung 63 liegt ist vergrößert. Die Zone 61 gilt weiterhin als belegt und im Falle einer Kombination mit der zeitlichen Hysterese ebenfalls als aktuell belegt.

Bewegt sich das Segment gemäß Position in Figur 13b nach rechts in Richtung außen, so reduziert sich der Anteil, der in der Zone gemäß Umrahmung liegt, wobei dennoch das Segment teilweise in der Zone 61 liegt. Die Zone gilt noch als belegt. Ohne die Vergrößerung der Umrahmung von Linie 62 auf Linie 63 würde das Segment 60 nun nicht mehr in der Zone 61 liegen und die Zone 61 würde als unbelegt oder zumindest aktuell nicht belegt gelten.

In Figur 13c ist das Segment 60 derart angeordnet, dass es außerhalb der Zone 61 liegt. Hat die Zone 61 den Zustand "nicht belegt", wird diese mit der Umrahmung 62 auch nicht vergrößert. Die Zone 61 gilt also weiterhin unbelegt

und im Falle einer Kombination mit der zeitlichen Hysterese ebenfalls als aktuell nicht belegt.

Bewegt sich das Segment gemäß Position in Figur 13d nach links in Richtung auf die Zone 61 zu, so erreicht das Segment die Zone 61 aber nicht. Die Zone gilt noch als "nicht belegt" und im Falle einer Kombination mit der zeitlichen Hysterese ebenfalls als "aktuell nicht belegt".

Bezugszeichenliste

| | |
|---|---|
| 1 | Diagramm |
| 2 | Block |
| 3 | Bildsignal |
| 4 | Bildsignal |
| 5 | Zone |
| 6 | Tür |
| 7 | Person |
| 8 | Block |
| 9 | Bildsignal |
| 10 | Bildsignal |
| 11 | Block |
| 12 | Bilddaten |
| 13 | Bilddaten |
| 14 | Block |
| 15 | Block |
| 16 | Filter |
| 17 | Freiraumüberwachung |
| 20 | Diagramm |
| 21 | Eingangsdaten |
| 22 | Block |
| 23 | Bild |
| 24 | Block |
| 25 | Bild |
| 26 | Block |
| 27 | Bild |
| 28 | Block |
| 29 | Pfeil |
| 30 | Bild |
| 31 | Eingangsbereich |
| 32 | Person |
| 33 | Zone |
| 34 | Bild |
| 35 | Tür |
| 36 | Tür |
| 37 | Bild |
| 38 | Bild |
| 39 | Bild |
| 40 | Bild |
| 41 | Referenzbild |
| 42 | Zone |
| 43 | Höhenkarte |
| 44 | Segment |
| 45 | Höhenkarte |
| 50 | Bild |
| 51 | Person |
| 52 | Höhenkarte |
| 53 | Zone |
| 60 | Segment |
| 61 | Zone |

62 Umrahmung
63 Umrahmung

## Patentansprüche

1. Verfahren zur Erkennung einer Belegung einer überwachten räumlichen Zone, mittels einer ein Stereobild erzeugenden Bildaufnahmevorrichtung zur Erzeugung eines ersten Bildsignals (imgL) und eines zweiten Bildsignals (imgR), wobei die beiden ersten und zweiten Bildsignale (imgL,imgR) oder daraus verarbeitete Bildsignale mittels eines Stereo-Vergleichsverfahrens zu einem dritten Bildsignal (img) verarbeitet werden, aus welchem eine Höhenkarte mit Höhendaten der überwachten Zone erzeugt wird, und daraus ein Belegungsstatus der überwachten Zone bestimmt wird und der Belegungsstatus ausgegeben wird.

2. Verfahren nach Anspruch 1 , **dadurch gekennzeichnet, dass** auf die Höhendaten der Höhenkarte ein Verfahren zur Hintergrundunterdrückung angewendet wird zur Erzeugung hintergrundbereinigter Höhendaten und einer hintergrundbereinigten Höhenkarte, wobei die bereinigten Höhendaten der bereinigten Höhenkarte mit einem Höhenschwellenwert verglichen werden und daraus ein Belegungsstatus der überwachten Zone bestimmt wird und der Belegungsstatus ausgegeben wird.

3. Verfahren nach Anspruch 1 oder 2 **dadurch gekennzeichnet, dass** bei Überschreiten eines Höhenschwellenwerts durch die bereinigten Höhendaten der bereinigten Höhenkarte ein Belegungsstatus der überwachten Zone als belegt gesetzt wird.

4. Verfahren nach Anspruch 1, 2 oder 3, **dadurch gekennzeichnet, dass** die Zone in Teilbereiche unterteilt wird, wobei eine vorgebbare Anzahl von Teilbereichen oder Pixeln eines Segments vorliegen muss, in welchen der Höhenschwellwert durch die Höhendaten überschritten sein muss, damit ein Belegungsstatus als belegt gesetzt wird.

5. Verfahren nach einem der vorhergehenden Ansprüche, **dadurch gekennzeichnet, dass** die Höhendaten segmentiert werden, so dass Daten von zusammenhängenden Teilbereichen oder Pixeln, welche sich bezüglich eines Datenwertes, beispielsweise dem Höhen- oder Grauwert von der Umgebung unterscheiden, als zu einem Segment zugehörig bewertet werden.

6. Verfahren nach Anspruch 4 oder 5 **dadurch gekennzeichnet, dass** bei mindestens einem vollständig oder mit nur einem messbaren Anteil in einer Zone befindlichem Segment, die Zone als belegt definiert wird.

7. Verfahren nach Anspruch 4,5 oder 6 **dadurch gekennzeichnet, dass** die Daten der Segmente ausgewertet werden, wobei bei oder ab einer vordefinierten Größe oder Ausdehnung eines Segments die Zone als belegt definiert wird.

8. Verfahren nach einem der vorhergehenden Ansprüche 3 bis 7, **dadurch gekennzeichnet, dass** anderenfalls der Belegungsstatus als unbelegt gesetzt wird.

9. Verfahren nach einem der vorhergehenden Ansprüche, **dadurch gekennzeichnet, dass** die Höhenkarte mit einer Occupancykarte kombiniert wird, insbesondere derart, dass jeder Occupancywert mit dem Wert der Höhenkarte addiert wird, welcher hinsichtlich der Lage in der Welt zu dem Occupancywert korrespondiert.

10. Verfahren nach zumindest einem der vorhergehenden Ansprüche, **dadurch gekennzeichnet, dass** die überwachte Zone zumindest eine räumliche Hysterese aufweist.

11. Verfahren nach zumindest einem der vorhergehenden Ansprüche, **dadurch gekennzeichnet, dass** die überwachte Zone bei als belegt geltendem Zustand zumindest einmal vergrößert und oder verkleinert wird.

12. Verfahren nach zumindest einem der vorhergehenden Ansprüche, **dadurch gekennzeichnet, dass** die überwachte Zone zumindest eine zeitliche Hysterese aufweist.

13. Verfahren nach zumindest einem der vorhergehenden Ansprüche, **dadurch gekennzeichnet, dass** die überwachte Zone eine zeitliche Hysterese (HystAct) bei der Aktivierung und eine zeitliche Hysterese (HystDeact) bei der Deaktivierung aufweist.

**14.** Verfahren nach zumindest einem der vorhergehenden Ansprüche, **dadurch gekennzeichnet, dass** ein Objekt über eine erste zeitliche Mindestzeitdauer sich in der überwachten Zone befinden muss, bevor der Belegungszustand der Zone als belegt gesetzt wird.

**15.** Verfahren nach zumindest einem der vorhergehenden Ansprüche, **dadurch gekennzeichnet, dass** ein Objekt über eine zweite zeitliche Mindestzeitdauer sich nicht in der überwachten Zone befinden muss, bevor der Belegungszustand der Zone als nicht belegt gesetzt wird.

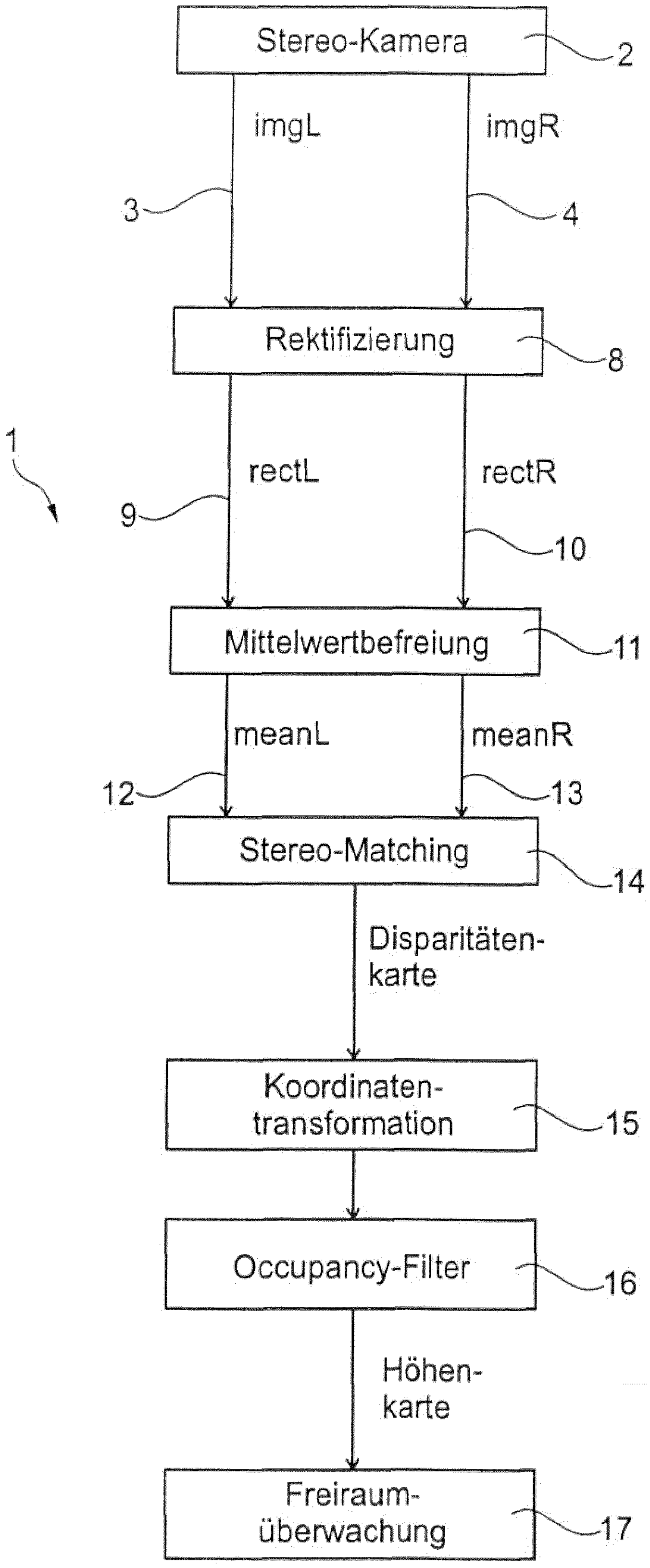
Stereo-Kamera
2
imgL
imgR
3
4
Rektifizierung
8
1
rectL
rectR
9
10
Mittelwertbefreiung
11
meanL
meanR
12
13
Stereo-Matching
14
Disparitäten-
karte
Koordinaten-
transformation
15
Occupancy-Filter
16
Höhen-
karte
Freiraum-
überwachung
17

Fig. 1

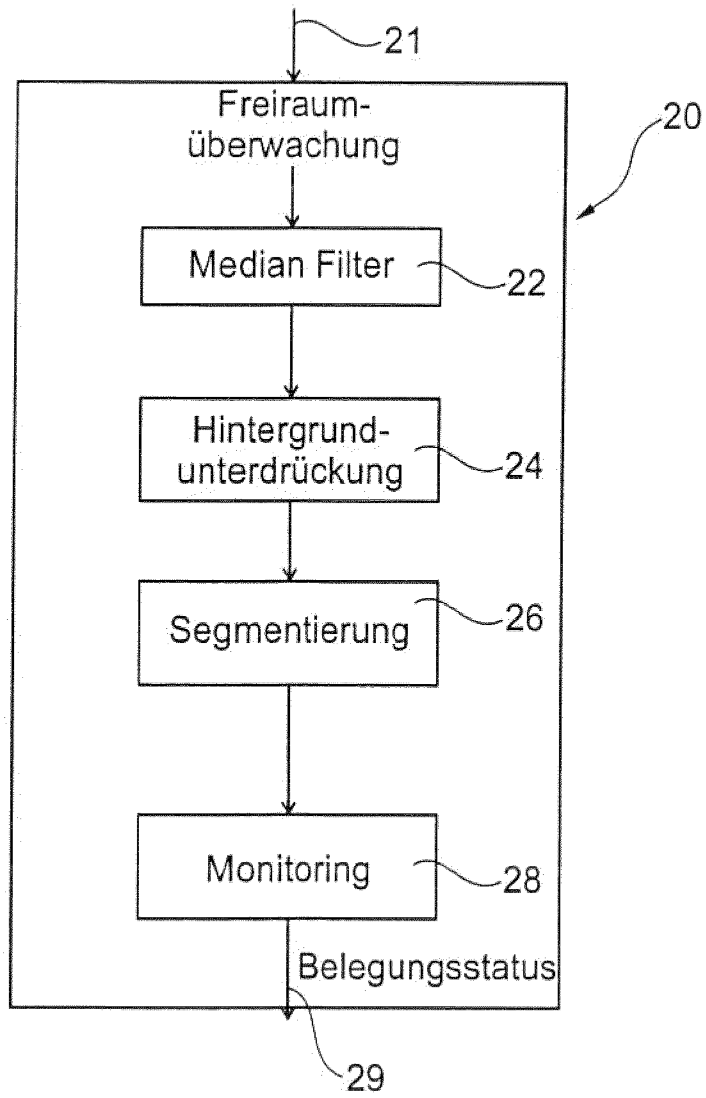
21
Freiraum-
überwachung
20
Median Filter
22
Hintergrund-
unterdrückung
24
Segmentierung
26
Monitoring
28
Belegungsstatus
29

Fig. 2

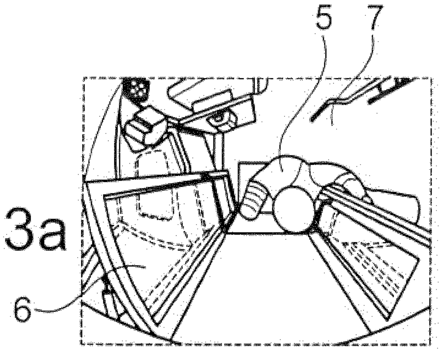

Fig. 3a

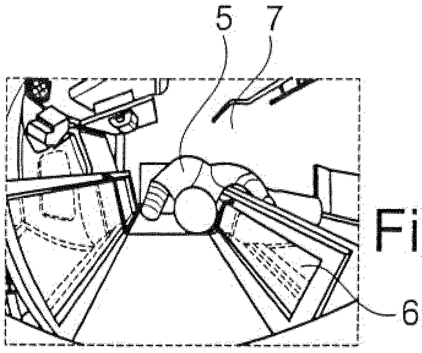

Fig. 3b

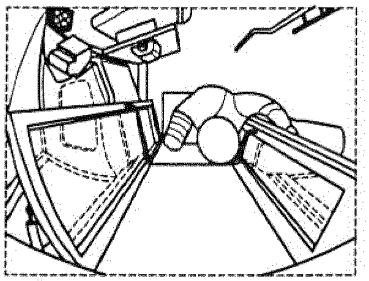
Fig. 4a

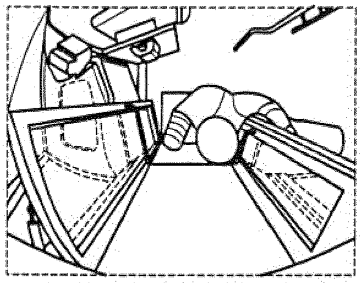
Fig. 4b

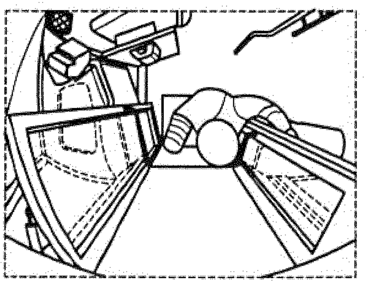
Fig. 5a

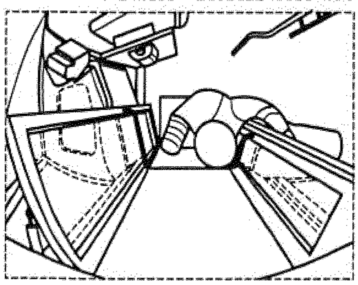
Fig. 5b

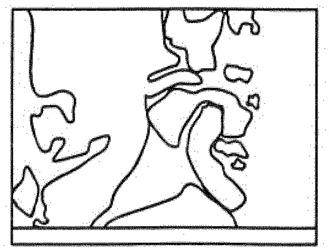
Fig. 6

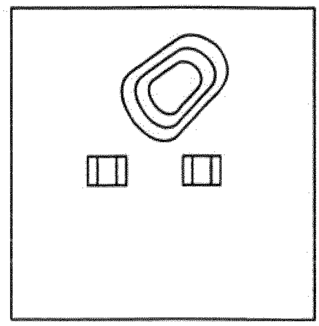
Fig. 7

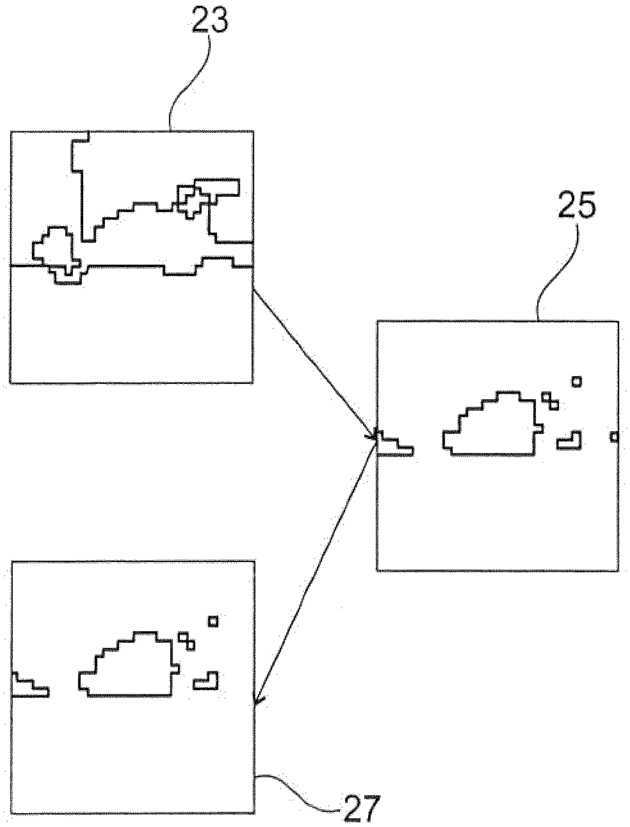


Fig. 8

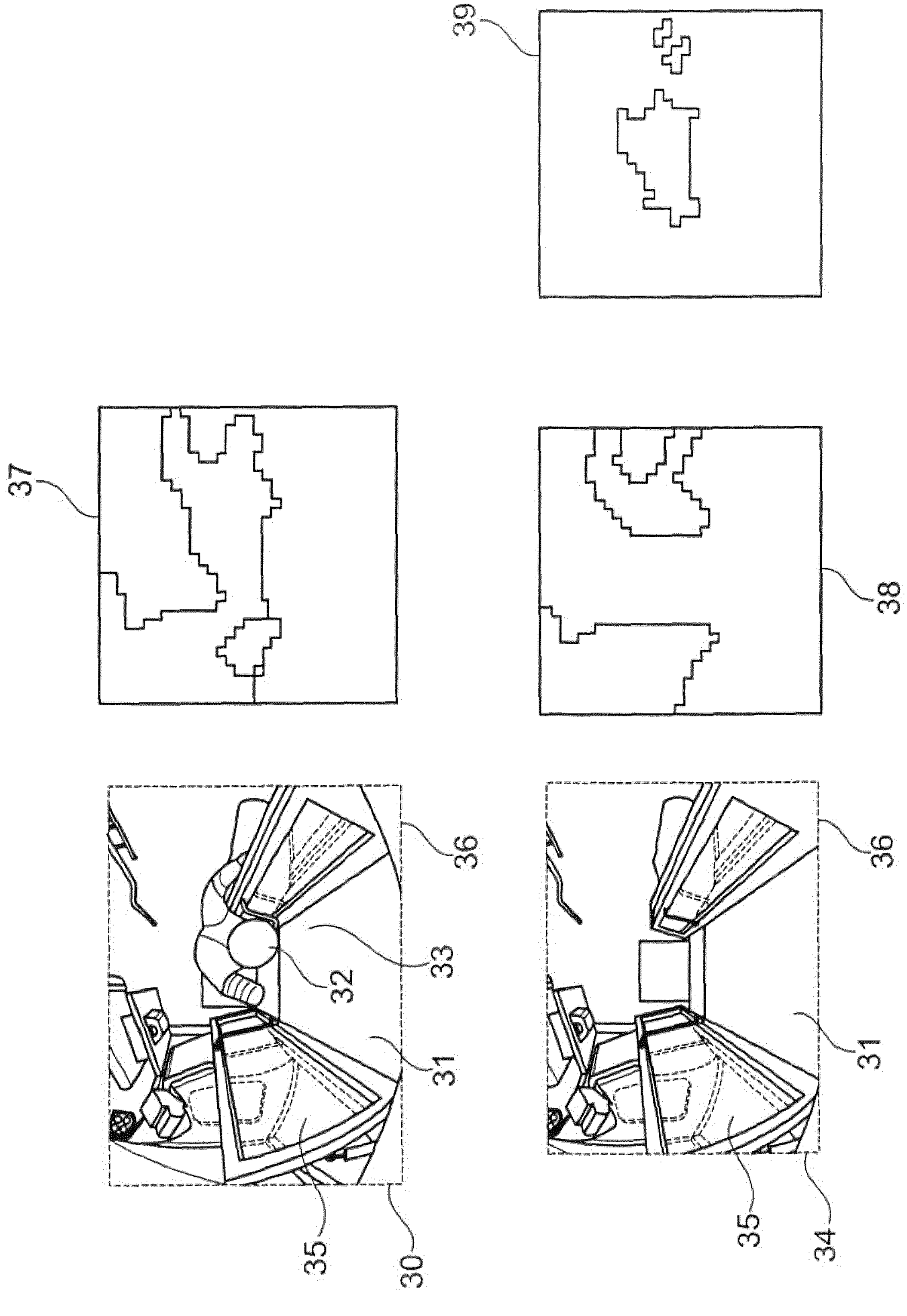


Fig. 9

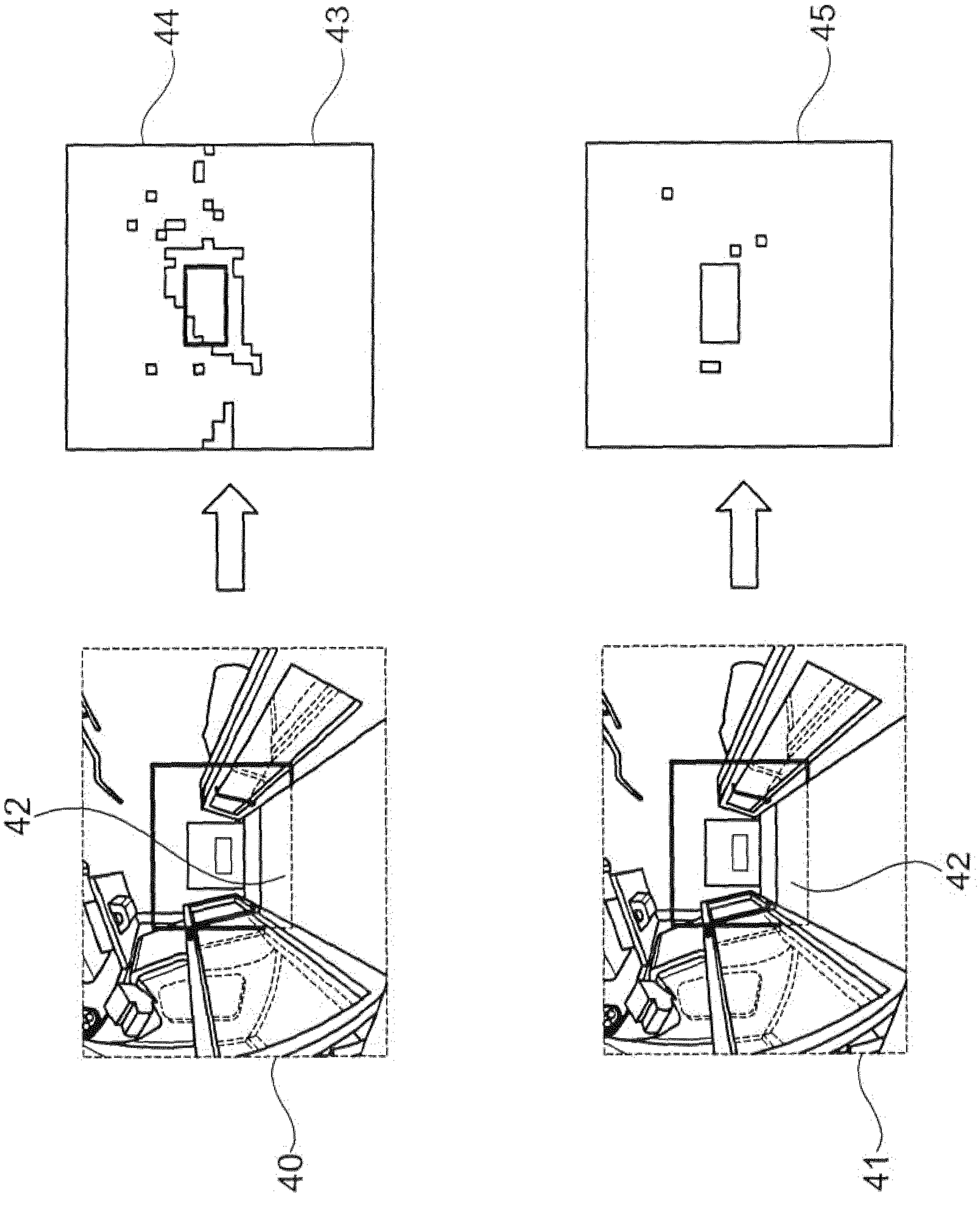


Fig. 10

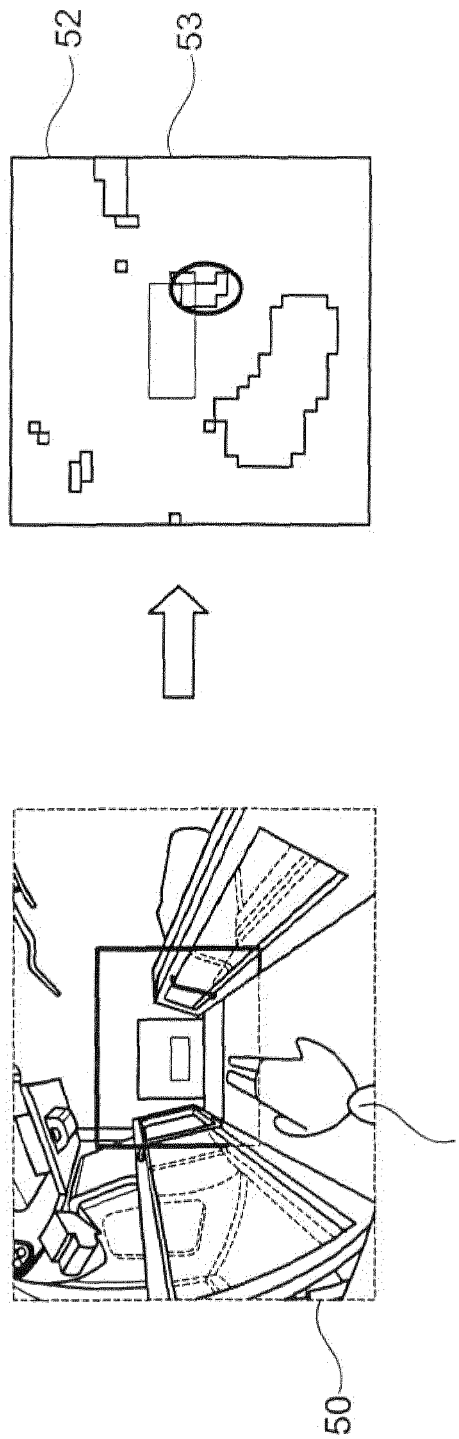


Fig. 11

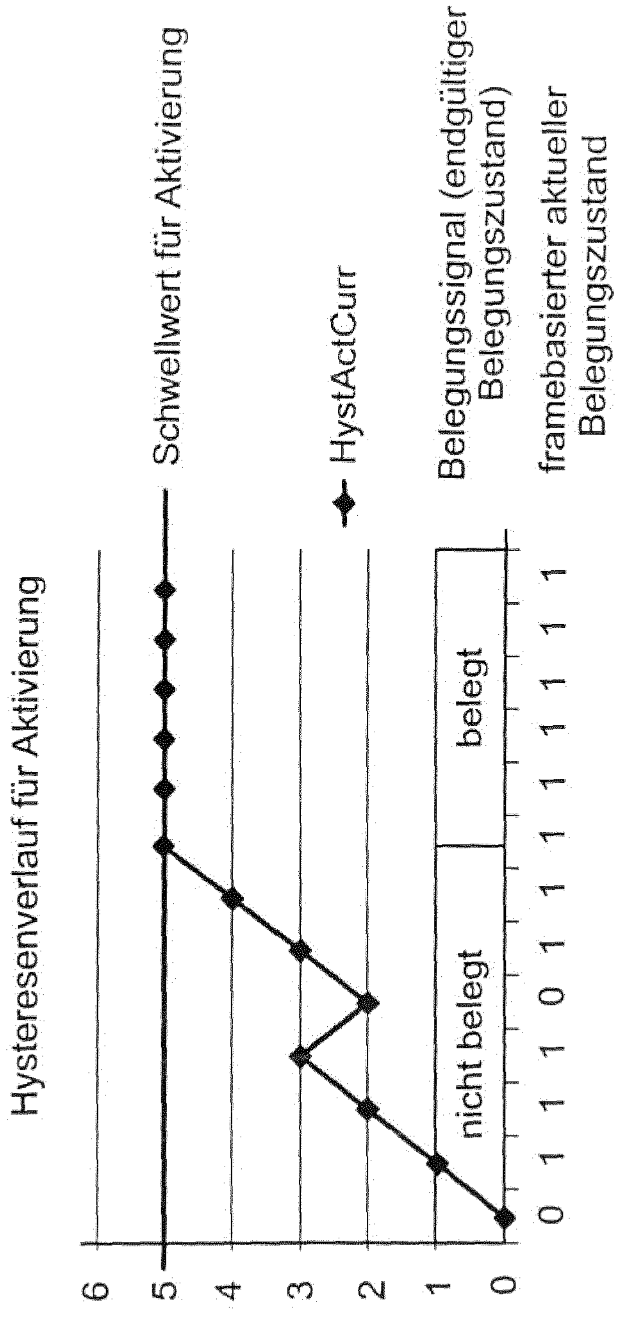
Hysteresenverlauf für Aktivierung
Schwellwert für Aktivierung
HystActCurr
Belegungssignal (endgültiger Belegungszustand)
framebasierter aktueller Belegungszustand
nicht belegt
belegt
0 1 2 3 4 5 6
0 1 1 1 0 1 1 1 1 1 1 1 1


Fig. 12

Fig. 13b

Fig. 13d

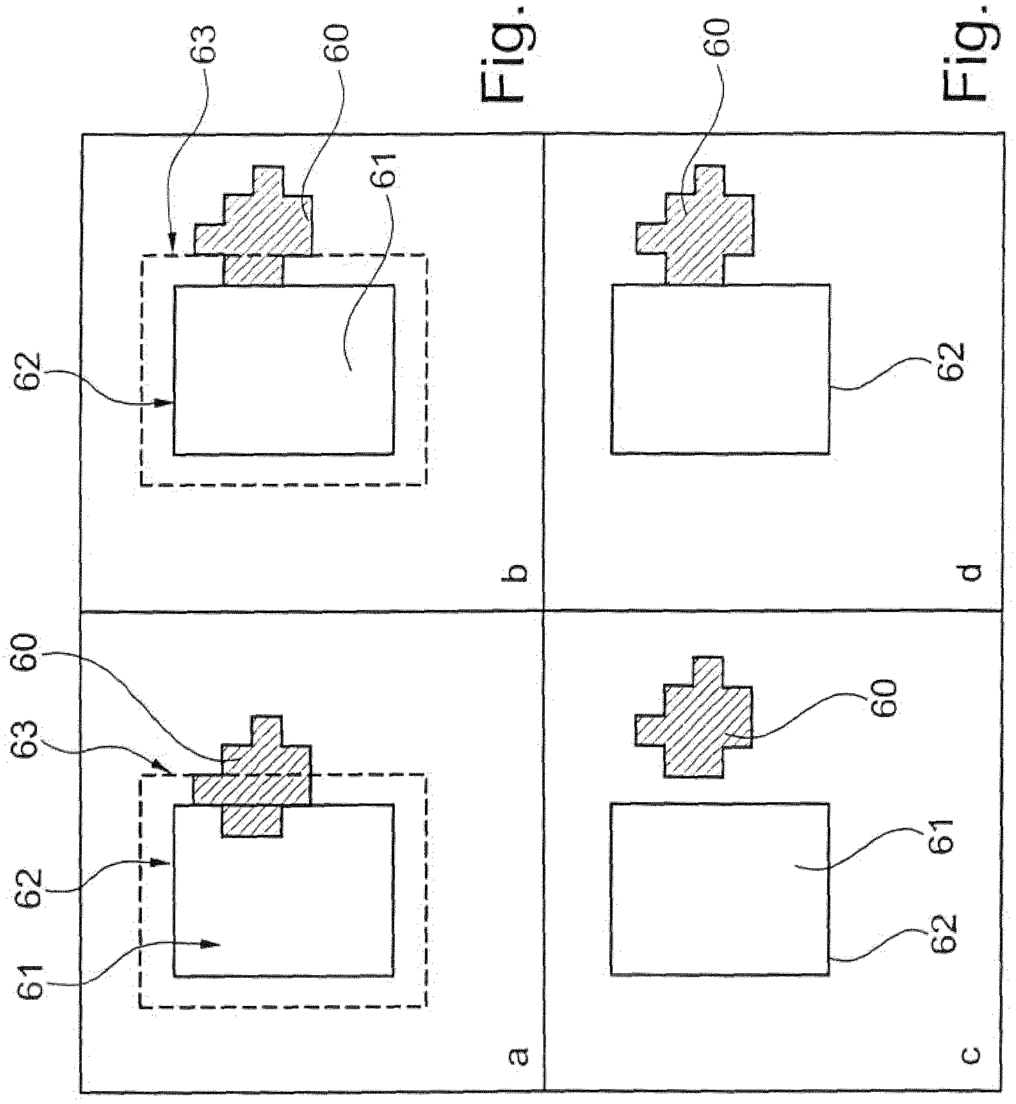


Fig. 13a

Fig. 13c

Europäisches Patentamt
European Patent Office
Office européen des brevets

## EUROPÄISCHER RECHERCHENBERICHT

Nummer der Anmeldung
EP 13 19 3782

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>Y<br>A | US 2011/044502 A1 (LIU WEI [CN] ET AL) 24. Februar 2011 (2011-02-24)<br>* Absatz [0084] - Absatz [0099] *<br>----- | 1,3,8<br><br>2<br>4-7 | INV.<br>G06K9/00 |
| X<br><br>Y | GB 2 476 869 A (SHOPPERTRAK RCT CORP [US]) 13. Juli 2011 (2011-07-13)<br>* Absatz [0032] - Absatz [0042] *<br>* Absatz [0046] - Absatz [0052] *<br>----- | 1,3-8<br><br>2,9-15 | |
| Y | US 2002/061134 A1 (COFER DARREN DUANE [US] ET AL) 23. Mai 2002 (2002-05-23)<br>* Absatz [0044] - Absatz [0051] *<br>* Absatz [0074] - Absatz [0075] *<br>----- | 10-15 | |
| Y<br><br>A | DE 10 2011 011929 A1 (HELLA KGAA HUECK & CO [DE]) 23. August 2012 (2012-08-23)<br>* das ganze Dokument *<br>& US 2014/049647 A1 (ICK JULIA [DE]) 20. Februar 2014 (2014-02-20)<br>----- | 9<br><br>1-8 | |
| X<br><br>A | US 2007/047837 A1 (SCHWAB JOHN [US] ET AL) 1. März 2007 (2007-03-01)<br>* das ganze Dokument *<br>----- | 1,4,5<br><br>2,3,8 | RECHERCHIERTE SACHGEBIETE (IPC)<br>G06K<br>G06T |

Der vorliegende Recherchenbericht wurde für alle Patentansprüche erstellt

1

| Recherchenort | Abschlußdatum der Recherche | Prüfer |
|---|---|---|
| Den Haag | 12. Juni 2014 | de Bont, Emma |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 13 19 3782

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-06-2014

| Im Recherchenbericht angeführtes Patentdokument | Datum der Veröffentlichung | Mitglied(er) der Patentfamilie | Datum der Veröffentlichung |
|---|---|---|---|
| US 2011044502 A1 | 24-02-2011 | AU 2009311052 A1 | 11-11-2010 |
| | | CN 101527046 A | 09-09-2009 |
| | | EP 2426642 A1 | 07-03-2012 |
| | | US 2011044502 A1 | 24-02-2011 |
| | | WO 2010124497 A1 | 04-11-2010 |
| GB 2476869 A | 13-07-2011 | CA 2723613 A1 | 11-07-2011 |
| | | GB 2476869 A | 13-07-2011 |
| | | US 2011169917 A1 | 14-07-2011 |
| | | US 2013314505 A1 | 28-11-2013 |
| US 2002061134 A1 | 23-05-2002 | AT 382823 T | 15-01-2008 |
| | | EP 1373785 A1 | 02-01-2004 |
| | | JP 2004535616 A | 25-11-2004 |
| | | US 2002061134 A1 | 23-05-2002 |
| | | WO 02073086 A1 | 19-09-2002 |
| DE 102011011929 A1 | 23-08-2012 | DE 102011011929 A1 | 23-08-2012 |
| | | EP 2676240 A1 | 25-12-2013 |
| | | US 2014049647 A1 | 20-02-2014 |
| | | WO 2012110653 A1 | 23-08-2012 |
| US 2007047837 A1 | 01-03-2007 | US 2007047837 A1 | 01-03-2007 |
| | | WO 2007027324 A2 | 08-03-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102010054626 A1